# EUROPEAN PATENT SPECIFICATION

(11) **EP 4 505 909 B1**
(45) Date of publication and mention of the grant of the patent: **22.04.2026**
(21) Application number: 24193690.5
(22) Date of filing: 08.08.2024
(51) Int. Cl.: F04B 43/04, F04B 35/04, F04B 45/047, F04B 49/06, H01F 7/06, H01F 7/16, H02K 7/14, H02K 33/16, H02P 25/06, H02P 27/06, A47C 27/08, A47C 27/10, A61G 7/057

(54) **APPARATUS FOR DRIVING A LINEAR AC MOTOR USING DC VOLTAGE FOR INFLATING AN AIR MATTRESS**
VORRICHTUNG ZUM ANTREIBEN EINES LINEAREN WECHSELSTROMMOTORS UNTER VERWENDUNG VON GLEICHSPANNUNG UM EINE LUFTMATRAZTE AUFZUBLASEN
APPAREIL POUR ENTRAÎNER UN MOTEUR À COURANT ALTERNATIF LINÉAIRE À L'AIDE D'UNE TENSION CONTINUE POUR GONFLER UN MATELAS GONFLABLE

(30) Priority: 10.08.2023 US 202363518566 P
(43) Date of publication of application: 12.02.2025
(60) Divisional application: 26165106.1
(73) Proprietor: Hill-Rom Services, Inc., Batesville, IN 47006-9167 (US)
(72) Inventor: SCOLAN, Maxime E, Batesville, 47006-9167 (US); AUDIC, Mickael, Batesville, 47006-9167 (US); APPRIOU, Ronan, Batesville, 47006-9167 (US); LE NAOUR, Pierre-Yves, Batesville, 47006-9167 (US)
(74) Representative: Reddie & Grose LLP

(56) References cited:
- EP-A1- 3 361 618
- JP-A- 2001 349 287
- US-A1- 2005 047 923
- US-A1- 2017 056 264

## Description

The present disclosure relates to an apparatus for driving a linear alternating current (AC) motor and particularly, to an apparatus for driving a linear AC motor using direct current (DC) voltage. More particularly, the present disclosure relates to an apparatus for driving a linear AC air pump located inside of an air mattress to provide pressurized air to bladders included within the air mattress.

Linear AC pumps are sometimes used to inflate one or more bladders included in air mattresses. Such linear AC pumps may be dual diaphragm pumps, for example. Oftentimes, such linear AC pumps are included in a housing that hangs on a footboard of a patient bed. The housing also contains circuitry to apply an AC voltage signal to the linear AC pump as well as to additional components such as valves and pressure sensors. In such embodiments, the AC mains voltage, such as 120 Volts AC (VAC), from a healthcare facility is provided to the circuitry inside of the housing via an AC power cord and plug. Depending upon the country in which such mattresses are used, the AC mains voltage may be in the range of about 80 VAC to about 264 VAC.

Some air mattresses have pneumatic components located inside interior regions of the mattresses, such as in foot sections of the mattresses. It is not desirable to have mains AC voltage, such as in the range of about 80 VAC to about 264 VAC, directly coupled to any circuitry internal to the air mattress so as to avoid shock hazards at such high voltage levels to a person lying on the air mattress. However, it would be desirable to use the same type of linear AC pumps that are provided in housings outside of the mattress, within mattress versions having the pneumatic components internal to the mattress. Therefore, what is needed is an apparatus, in the form of an electrical circuit, that is able to drive an AC linear motor of the type used in linear AC pumps using a DC voltage. Such a circuit may be welcomed for use in other applications as well and not just in air mattresses. It is also desirable to minimize the number of circuit components internal to an air mattress so as to minimize an amount of space occupied by a printed circuit board (PCB) that carries such circuit components.

EP3361618A1 relates to a frequency converter (1) for operating an electrical machine (50) on an electrical AC voltage network (10), wherein the frequency converter (1) has a rectifying feed unit (20) and an inverter (40) which are interconnected via a DC voltage intermediate circuit (30) with an intermediate circuit capacitor (31), wherein the inverter (40) is implemented as a four-quadrant controller with four switches (S1, S2, S3, S4), characterized in that a clockable switch (S5) is arranged in a conduction path (32) in the inverter-side part of the DC voltage intermediate circuit (30), which connects the DC voltage intermediate circuit (30) to the inverter (40), which switch is designed to selectively open or close the conduction path (32) or for clocked operation. o provide an air pump maximum output control system that can perform variable control and maximum control over the output of a pump. JP2001349287A relates to an air pump maximum output control system comprising a means for respectively calculating an applied voltage to an electromagnet for driving a diaphragm type linear air pump with a magnetic moving element, an input current to the electromagnet, and the phase angles of both applied voltage and input current, a means for performing an operation, when receiving an input of the resistance and inductance of the electromagnet winding, to calculate an induced voltage, and a means for controlling a driving power source frequency so as to maximize the electric output that is available as the vector inner product of the induced voltage and an electromagnet current. US2017056264A1 relates to a soliton air mattress which includes an array of air bladder cells that are individually inflatable to quiescent pressure levels which provide comfortable support for a human body, and a soliton wave generator including an air pressure-pulse generator controlled by a wave sequence generator for introducing into ordered sequences of air bladder cells a wave-like time sequence of air pressure pulses which vary quiescent pressure levels in the cells, the pressure wave resulting in a soliton traveling wave of body support force reduction which traverses surfaces of the air bladder cells, thus reducing normal forces exerted on a body and minimizing the occurrence rate of shear forces exerted on the body, thereby inhibiting formation of bedsores. The soliton wave patterns may optionally simulate water waves and/or rocking motions of a boat to produce relaxing effects. US2005047923A1 relates to a compact air pump and valve package which includes pump and valve assemblies integral with a pressure housing defining inlet ports and a plurality of fittings for connecting air lines to an interior of the pressure housing. The linear diaphragm pump assembly has a permanent magnetic shuttle mounting two diaphragms reciprocated by an electromagnet. The valve assembly has a plurality of solenoid valves disposed within the pressure housing, each solenoid valve being operable to control flow into or out of the pressure housing through an associated one of the plurality of fittings. The housing has special mounts to isolate vibration arising from movement of the shuttle.

An apparatus according to the invention is defined in independent claim 1.

According to a first aspect of the present disclosure, an apparatus for inflating one or more air bladders of a mattress includes a linear pump that has an arm that configured to reciprocate substantially linearly back and forth to move at least one diaphragm of the linear pump to pressurize air that may be fed to the one or more bladders. The apparatus of the first aspect further includes a power converter that configured to convert incoming alternating current (AC) mains power into a direct current (DC) voltage and the apparatus also includes a DC motor driver that includes an H-bridge which receives the DC voltage from the power converter as an input and generates a square wave as an output that is coupled to the linear pump to drive the arm back and forth.

In some embodiments of the apparatus of the first aspect, the square wave may have a high state of about 24 VDC and a low state of about -24 VDC. If desired, the apparatus of the first aspect further may include a microcontroller that may provide a PWM control signal to the DC motor driver to control generation of the square wave. For example, the PWM control signal may have a duty cycle of about 50%. Alternatively or additionally, the microcontroller of the first aspect may provide a PWM control signal to the DC motor driver to control a frequency of the square wave. Further alternatively or additionally, this PWM control signal for controlling frequency may have a duty cycle of about 50%.

According to the invention, the microcontroller of the apparatus of the first aspect may provide a first PWM control signal and a second PWM control signal to the DC motor driver to control generation of the square wave. In such embodiments, when the first PWM control signal is in a high state, the second PWM signal may be in a low state, and when the second PWM control signal is in a high state, the first PWM control signal may be in a low state. If desired, the first and second PWM control signals each may have a duty cycle of about 50%.

In some embodiments of the present invention, the apparatus of the first aspect further includes a microcontroller that provides a first PWM control signal and a second PWM control signal to the DC motor driver to control a frequency of the square wave. Optionally, when the first PWM control signal is in a high state, the second PWM signal may be in a low state, and when the second PWM control signal is in a high state, the first PWM control signal may be in a low state. Further optionally, the first and second PWM control signals each may have a duty cycle of about 50%. The present disclosure contemplates that the DC motor driver is controlled to produce the square wave with a frequency of about 60 Hz during initial inflation of the one or more bladders and the DC motor driver may be controlled to produce the square wave with a frequency of about 50 Hz after the initial inflation.

If desired, the linear pump and the DC motor driver may be situated in an interior region of the mattress and the power converter may be situated outside of the mattress. Optionally, the at least one diaphragm of the linear pump may include two diaphragms. Further optionally, the arm may be situated between the two diaphragms. Still further optionally, the arm may include a magnetic arm and the linear pump may include a pair of electromagnets that may be energized by the square wave to reciprocally drive the arm back and forth to flex the two diaphragms.

In some embodiments of the apparatus of the first aspect, the AC mains power may be in the range of about 80 Volts AC (VAC) to about 264 VAC. Moreover, the DC voltage may be about 24 Volts DC (VDC). If desired, the DC motor driver may include an integrated circuit (IC) chip. Optionally, the IC chip may include either or both of a current sensing feature and a current-sense feedback feature. Alternatively or additionally, the IC chip of the first aspect may include one or more of a cycle-by-cycle current chopping feature, a fixed off-time current chopping feature, an overcurrent protection feature, or a short circuit protection feature.

The invention will now be further described by way of example with reference to the accompanying drawings, in which:

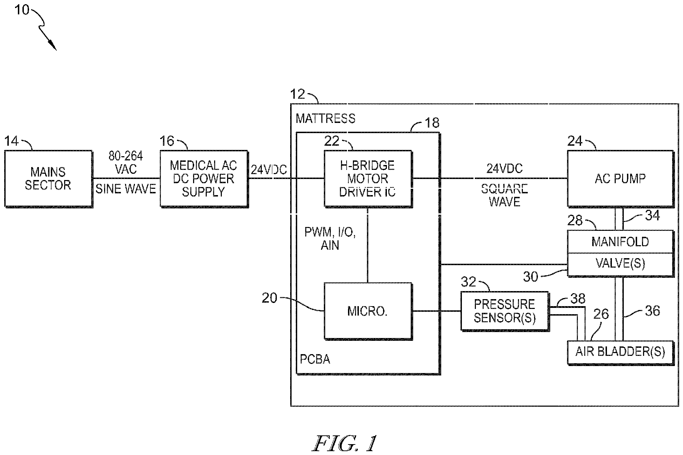

Fig. 1 is a block diagram showing a system in which AC mains power is converted to 24 Volts DC (VDC) by an AC-DC power converter, the 24 VDC being coupled to an H-bridge motor driver integrated circuit (IC), which provides a +/-24 Volt (V) square wave to a linear AC pump which, in turn, is pneumatically coupled to one or more air bladders of a mattress through a manifold and one or more valves, and showing a microcontroller electrically coupled to the H-bridge motor driver IC to provide one or more pulse width modulated (PWM) control signals to the H-bridge motor driver IC;

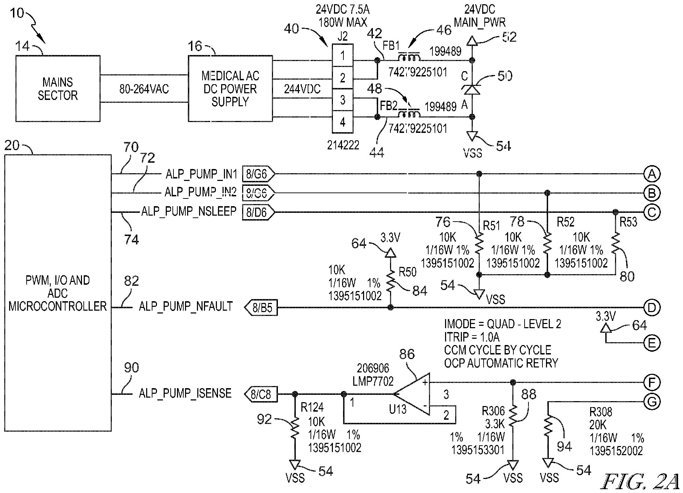

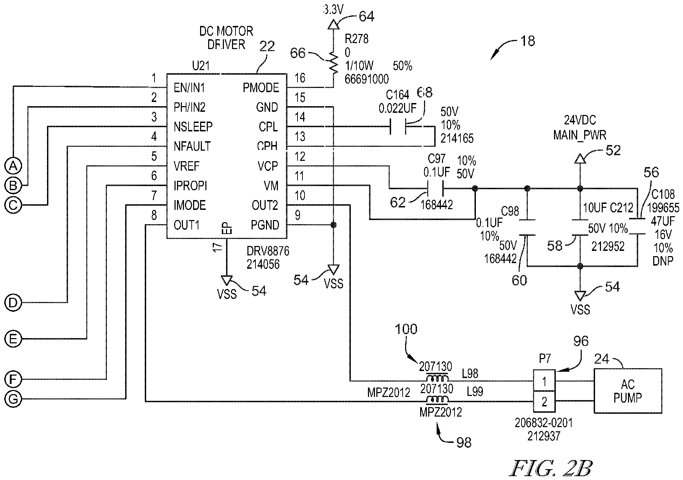

Figs. 2A and 2B together form an electric circuit schematic showing additional details of the H-bridge motor driver IC and its interconnection with the AC-DC power converter, the microcontroller, and the linear AC pump;

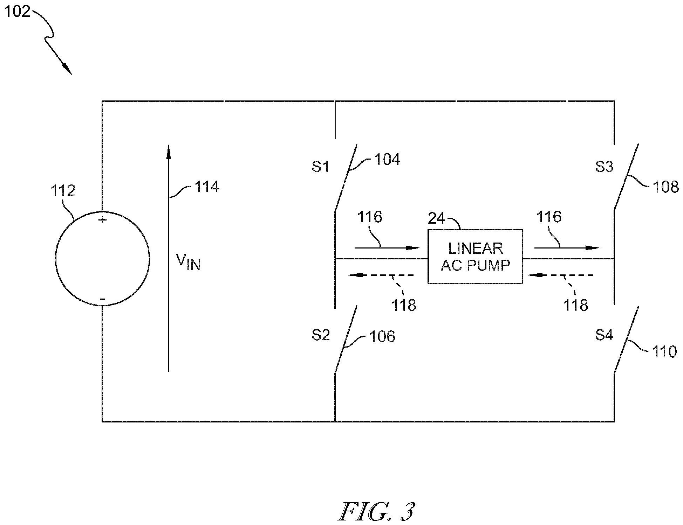

Fig. 3 is a diagrammatic view of an H-bridge included in the H-bridge motor driver IC;

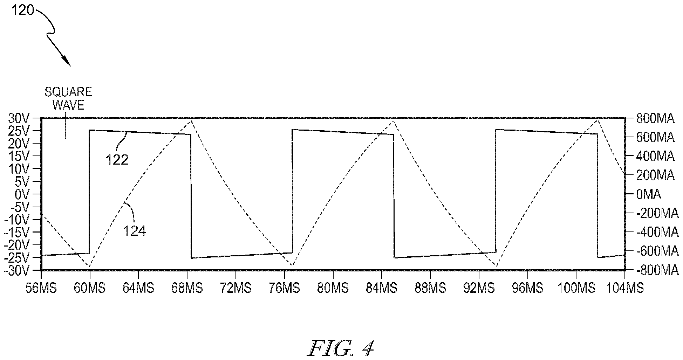

Fig. 4 is a graph showing the +/-24 V square wave and the current from the H-bridge motor driver IC as provided to the linear AC pump;

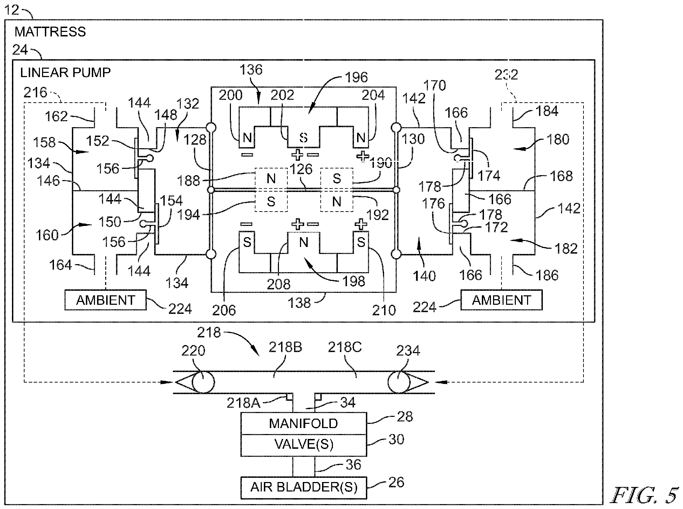

Fig. 5 is a diagrammatic view of the linear AC pump showing an arm of the linear AC pump in a neutral position having a pair of diaphragms at the opposite ends of the arm in unflexed configurations and showing the linear AC pump, the manifold, valve(s), and air bladder(s) situated within an interior region of the mattress;

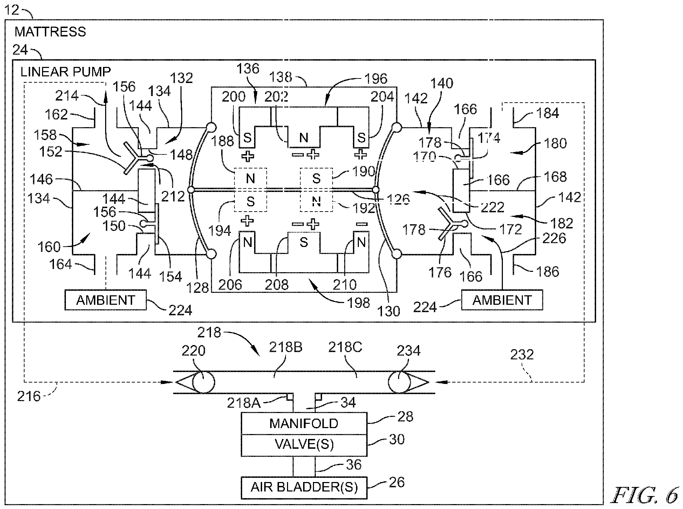

Fig. 6 is a diagrammatic view, similar to Fig. 5, showing a pair of electromagnets of the linear AC pump energized to move the arm to the left, thereby to flex the pair of diaphragms in a manner that draws air from the ambient atmosphere into a right side of the linear AC pump and that forces pressurized air from a left side of the linear AC pump to the one or more air bladders through the manifold and the one or more valves; and

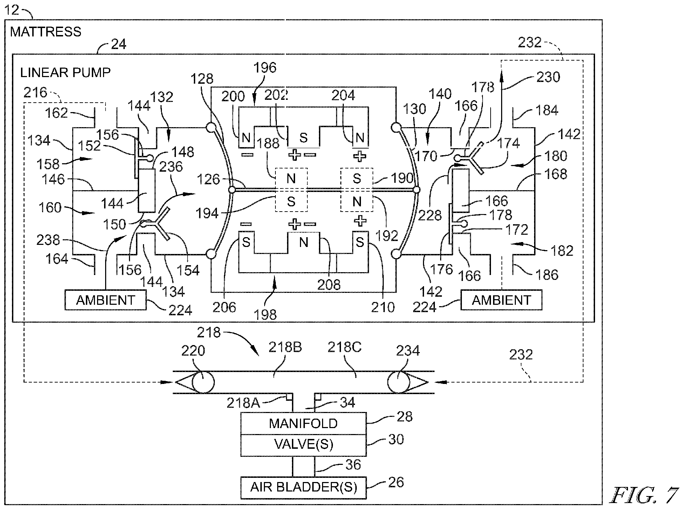

Fig. 7 is a diagrammatic view, similar to Figs. 5 and 6, showing the pair of electromagnets of the linear AC pump energized to move the arm to the right, thereby to flex the pair of diaphragms in a manner that draws air from the ambient atmosphere into the left side of the linear AC pump and that forces pressurized air from a right side of the linear AC pump to the one or more air bladders through the manifold and the one or more valves.

Referring now to Fig. 1, an apparatus 10 includes a mattress 12, a mains sector 14 such as a power plug and associated power cable, and an AC-DC power converter 16. Depending upon the country or region in which apparatus 10 is used, mains sector 14 provides alternating current (AC) mains power in the range of about 80 Volts AC (VAC) to about 264 VAC, to AC-DC power converter 16 which converts the incoming AC sine wave into 24 Volts direct current (VDC) power which is, in turn, provided to the circuitry of mattress 12. The mains power is received by mains sector 14 from a standard AC electrical outlet of a healthcare facility in which mattress 12 is used, for example. In some embodiments, mattress 12 is either the Baxter^{®} Hillrom^{®} Syntheto^{™} Hybrid mattress or the Baxter^{®} Therapy2^{™} Air mattress, each of which is manufactured by Hill-Rom S.A.S. of Pluvigner, France.

Still referring to Fig. 1, mattress 12 includes a printed circuit board assembly (PCBA) 18 that contains various electrical circuit components associated with the operation of mattress 12. Pertinent to the present disclosure, PCBA 18 includes a microcontroller 20 and an H-bridge motor driver 22 that is electrically coupled to the microcontroller 20 and that receives the 24 VDC power input from AC-DC power converter 16. It should be appreciated that PCBA 18 includes other circuity for use in controlling features and functions of mattress 12, but the focus herein is on those portions of PCBA 18 that interface with H-bridge motor driver 22. In the illustrative embodiment, H-bridge motor driver 22 is included in an integrated circuit (IC) and so is referred to elsewhere herein as H-bridge motor driver IC 22, or just IC 22.

Mattress 12 includes a linear AC pump 24 that is electrically coupled to H-bridge motor driver IC 22 and that is pneumatically coupled to one or more air bladders 26 of mattress 12 via a manifold 28 and one more valves 30 of mattress 12 as shown diagrammatically in Fig. 1. One or more pressure sensors 32 are included in mattress 12. The one or more pressure sensors 32 of mattress 12 are pneumatically coupled to the one or more air bladders 26 of mattress to sense the pressures therein and are electrically coupled to microcontroller 20.

In some embodiments, the one or more pressure sensor(s) 32 are mounted on PCBA 18 and in other embodiments, the one or more pressure sensor(s) 32 are physically coupled to the one or more air bladder(s) 26, including being located inside of the one or more bladders 26, at the discretion of the designer of mattress 12. In still further embodiments, the one or more pressure sensor(s) 32 are spaced apart from bladder(s) 26 and from PCBA 18, but are coupled to one or more conduits leading to the one or more bladder(s) 26.

As depicted diagrammatically in Fig. 1, PCBA 18, linear AC pump 24, bladder(s) 26, manifold 28, valve(s) 30, and pressure sensor(s) 32 are all situated inside an interior region of mattress 12 such as being situated within a housing that is, in turn, situated within the interior region of mattress 12. In some embodiments, these components 18, 24, 26, 28, 30, 32 and the associated housing, if present, are located within a foot section of mattress 12 that supports the lower legs and feet of an occupant of mattress 12. It should be appreciated, therefore, that various embodiments of mattress 12 are contemplated herein with some embodiments having only a single air bladder 26 and other embodiments having multiple air bladders 26 such as occupant support bladders, alternating pressure bladders that cyclically inflate and deflate to support different portions of the occupant at different times, rotation bladders to turn the occupant to the left and to the right, percussion and vibration (P&V) bladders for pulmonary therapy, heel relief bladders to reduce pressure on a patient's heels, and the like. Thus, while mattress 12 is shown diagrammatically in Fig. 1 having a single first pneumatic conduit 34 extending from linear AC pump 24 to manifold 28, a single second pneumatic conduit 36 extending from valve(s) 30 to bladder(s) 26, and a single third pneumatic conduit 38 extending from bladder(s) to pressure sensor(s) 32, it should be appreciated that embodiments of mattress 12 are contemplated herein as having multiple conduits 34, 36, 38 extending between components 24, 26, 28, 30, 32, as appropriate, depending upon the design of mattress 12.

As further indicated diagrammatically in Fig. 1, the electrical coupling between microcontroller 20 and H-bridge motor driver IC 22 includes electrical lines for providing pulse width modulated (PWM) signals from microcontroller 20 to H-bridge motor driver IC 22 and for providing input/output (I/O) signals between microcontroller 20 and H-bridge motor driver IC 22. Microcontroller 20 is also configured to receive analog input (AIN) signals in the illustrative embodiment of apparatus 10. In some embodiments, microcontroller 20 includes an analog-to-digital converter (ADC) to convert the AIN signals into digital form for transmission to other electrical components of mattress 12 including to H-bridge motor driver IC 22.

Referring now to Figs. 2A and 2B, an electric circuit schematic is provided showing additional details of the H-bridge motor driver IC 22 and its interconnection with AC-DC power converter 16, microcontroller 20, and linear AC pump 24. In the illustrative embodiment, H-bridge motor driver IC 22 is embodied as a model no. DRV8876 H-Bridge Motor Driver With Integrated Current Sense and Regulation available from Texas Instruments, Inc. of Dallas, Texas, U.S.A. AC-DC converter 16 has four electrical lines that couple to a 4-pin connector 40 of PCBA 18. Pins 1 and 2 of connector 40 are connected together and pins 3 and 4 of connector 40 are connected together to form a 24 VDC power line 42 and a ground line 44, respectively. Power and ground lines 42, 44 include respective first and second magnetic core inductors 46, 48 which serve as chokes for blocking out AC signals, and/or AC noise. Downstream from inductors 46, 48, a Zener diode 50 interconnects lines 42, 48 together such that a cathode of diode 50 connects to 24 VDC power 52 for circuitry of PCBA 18, including for H-bridge motor driver IC 22, and such that an anode of diode 50 connects to ground 54 for the circuitry of PCBA 18. Ground 54 is designated as Vss in Figs. 2A and 2B.

The 24 VDC power 52 and ground 54 are coupled together by a parallel combination of three capacitors including a 47 micro Farad (µF) capacitor 56, a 10 µF capacitor, and a 0.1 µF capacitor. The 24 VDC power is coupled directly to a mains voltage (VM) pin of H-bridge motor driver IC 22 (sometimes referred to hereinafter as simply IC 22) and is coupled to a charge pump voltage (VCP) pin of IC 22 through a 0.1 µF capacitor 62. A device ground (GND) pin and a power ground (PGND) pin of IC 22 are coupled together and to ground 54.

With reference to Fig. 2B, an H-bridge control input mode (PMODE) pin of IC 22 is coupled to a 3.3 V source 64 through a 0 Ω resistor to provide a logic high state at the PMODE pin which, in turn, configures IC 22 in a PWM control mode. The phase enable (PH/EN) control mode, corresponding to a logic low state at the PMODE pin, and the independent half-bridge control mode, corresponding to a Hi-Z state at the PMODE pin, are not used in IC 22 of apparatus 10 of the present disclosure. A charge pump high (CPH) pin is coupled to a charge pump low (CPL) pin of IC 22 through a 22 nano Farad (nF) ceramic capacitor 68 (shown as a .022 µF capacitor 68 in Fig. 2B).

A first H-bridge control input pin, labeled as EN/IN1 in IC 22, is coupled to an ALP_Pump_IN1 line 70 to receive a first PWM control signal from microcontroller 20. Similarly, a second H-bridge control input pin, labeled as PH/IN2 in IC 22, is coupled to an ALP_Pump_IN2 line 72 to receive a second PWM control signal from microcontroller. The first and second PWM control signals from microcontroller 20 on respective lines 70, 72 are square waves that have a low state of 0 V and a high state of about 3.3 V. However, the high and low states of the first and second PWM control signals are opposite of each other. That is, when the first PWM control signal on line 70 is in a high state, the second PWM signal on line 72 is in a low state, and when the second PWM control signal on line 72 is in a high state, the first PWM control signal on line 79 is in a low state. In the illustrative embodiment, the first and second PWM control signals have a frequency of about 60 Hertz (Hz) and a duty cycle of about 50 %.

As further shown in Figs. 2A and 2B, IC 22 includes an NSLEEP pin that is coupled to an ALP_Pump_nSleep line 74 to receive a sleep mode control signal from microcontroller 20. When the sleep mode control signal on line 74 is in a high state, of about 3.3 V, IC 22 is enabled or turned on for operation. When the sleep mode control signal on line 74 is in a low state, of about 0 V, IC 22 enters a low power sleep mode in which IC 22 is basically turned off. Conductors extending from lines 70, 72, 74 to respective EN/IN1, PH/IN2, and NSLEEP pins of IC 22 are each coupled to ground 54 through respective 10 kΩ resistors 76, 78, 80.

A fault indicator output (NFAULT) pin of IC 22 is coupled to an ALP_Pump_nFault line 82 to provide a fault indicator output signal to microcontroller 20 if a pump fault is detected by IC 22 in connection with the operation of linear AC pump 24. A conductor extending from the NFAULT pin of IC 22 is coupled to 3.3 V source 64 through a 10 kΩ pullup resistor 84 for open drain operation. Thus, the NFAULT pin of IC 22, and therefore line 82 to microcontroller 20, is in a high state during proper operation of linear AC pump 24 and is pulled low if a fault is detected. A VREF pin of IC 22 is coupled directly to 3.3 V source 64 which sets the internal current regulation limit of IC 22.

With continued reference to Figs. 2A and 2B, an analog current output (IPROPI) pin of IC 22 is coupled to a positive input terminal (+) of an operational amplifier 86 and is also coupled to ground 54 through a 3.3 kΩ resistor 88. At the IPROPI pin, IC 22 outputs an analog current that is proportional to the load current of the linear AC pump 24. An output terminal of operational amplifier 86 is coupled to an ALP_PUMP_ISENSE line 90 to provide a current sense signal to microcontroller 20. The output terminal of operational amplifier 86 is fed back to a negative terminal (-) thereof and is also coupled to ground 54 through a 10 kΩ resistor 92. Thus, operational amplifier 86 is configured as a voltage follower in the illustrative embodiment. A current regulation (IMODE) pin of IC 22 is coupled to ground 54 through a 20 kΩ resistor 94. The use of 20 kΩ resistor 94 between the IMODE pin and ground 54 establishes the IMODE current regulation function of IC 22 as a cycle-by-cycle PWM current chopping scheme.

A first output (OUT1) pin and a second output (OUT2) pin of IC 22 are coupled to terminals of a connector 96 of linear AC pump 24 through respective first and second magnetic core inductors 98, 100 to serve as chokes to block out AC signals and/or AC noise from linear AC pump 24. OUT1 and OUT2 pins of IC 22 alternate between 24 V and 0 V depending upon the manner in which an H-bridge internal to IC 22 is controlled by the first and second PWM control signals received at the EN/IN1 and PH/IN2 pins of IC. Thus, when the OUT1 pin output is 24 V, the OUT2 pin output is 0 V, and when the OUT2 pin output is 24 V, the OUT1 pin output is 0 V.

The frequency and duty cycle of the 24 V square wave output from the OUT1 and OUT2 pins matches the 60 HZ, 50 % duty cycle of the first and second PWM control signals, but the amplitude of the OUT1 and OUT2 pin square waves are about 24 V, whereas the amplitude of the PWM signals is about 3.3 V as noted above. Also, because of the reversal of the polarity of the 24 V square wave being applied to the two terminals of connector 96 of linear AC pump 24, the current through the linear AC pump from one terminal of connector 96 to the other, reverses direction each cycle of the duty cycle. Thus, when 24 V is applied to a first terminal of connector 96 and 0 V to the second terminal of connector 96, the resulting voltage applied to linear AC pump 24 is arbitrarily considered to be an applied voltage of about +24 V. On the other hand, when 24 V is applied to the second terminal of connector 96 and 0 V to the first terminal of connector 96, the resulting voltage applied to linear AC pump 24 is arbitrarily considered to be an applied voltage of about -24 V. Accordingly, the square wave applied to linear AC pump 24 by IC 22 varies between a high state of about +24 v and a low state of about -24 V.

As its name implies, H-bridge Motor Driver IC 22 is configured with an internal H-bridge that operates to produce the output signals at the OUT1 and OUT2 pins of IC 22. Fig. 3 is a diagrammatic view of an H-bridge 102 and is provided in this disclosure to illustrate the general principals of motor control using an H-bridge. H-bridge 102 includes a first switch 104, a second switch 106, a third switch 108, and a fourth switch 110 (these are also labeled as S1, S2, S3, and 24, respectively, in Fig. 3). A voltage source 112 produces a voltage (Vin) with a current flow in the direction of arrow 114. When all of switches 104, 106, 108, 110 are open, as shown in Fig. 3, an open circuit condition exists and there is no current flow though linear AC motor 24.

When switches 104, 110 are closed, with switches 106, 108 remaining open, current 114 from voltage source 112 flows through switches 104, 110 and through linear AC pump 24 in the direction of solid arrows 116. When switches 106, 108 are closed, with switches 104, 110 being open, current 114 from voltage source 112 flows through switches 106, 108 and through linear AC pump 24 in the direction of dotted arrows 118. Thus, H-bridge 102 operates to repeatedly open and close switch pair 104, 110 and to repeatedly open and close switch pair 106, 108, but in a manner having switch pair 106, 108 opened when switch pair 104, 110 is closed and vice versa. This repeatedly and cyclically alternates the current flow though linear AC pump 24 between directions 116, 118. In IC 22, the electric circuit elements corresponding to switches 104, 106, 108, 110 of Fig. 3 are embodied as N-channel metal-oxide-semiconductor field-effect transistors (MOSFET's).

Referring now to Fig. 4, a graph 120 is provided showing a +/-24 V square wave 122 and a generally saw tooth-shaped current wave 124. The X-axis of graph 120 corresponds to time, in milliseconds (ms), the left side Y-axis of graph 120 corresponds to voltage, in Volts (V), and the right side Y-axis of graph 120 corresponds to current, in milliamps (mA). Square wave 122 represents the voltage applied to linear AC pump 24 from OUT1 and OUT2 pins of IC 22 via connector 96 and saw tooth-shaped wave 124 represents the current draw by linear AC pump 24 during the operation thereof. Ordinarily (i.e., in other more typical uses), linear AC pump 24 is driven by a sinusoidal AC input voltage which results in a sinusoidal current draw. In other words, and as its name implies, linear AC pump is designed to be operated by an alternating current (AC) signal. Furthermore, H-bridges such as the one implemented in IC 22 are typically used to control rotary motors, including servomotors, having rotary output shafts (aka rotors), not linear motors. Accordingly, the present design of apparatus 10 represents an unorthodox combination of components. That is, the use of an H-bridge to convert a DC supply voltage into a square wave to drive a linear AC pump, such as pump 24, is an unconventional design approach. The abrupt voltage swings between +24 V and -24 V, as represented by wave 122 in Fig. 4, with its corresponding sharp current peaks, as represented by wave 124 in Fig. 4, actually is detrimental to the life of linear AC pump 24. However, it has been determined that a suitable lifespan for linear AC pump 24, is still achievable with regard to the illustrative design of mattress 12 of apparatus 10.

Additional details of the model no. DRV8876 IC 22 used in the illustrative embodiment of apparatus 10 can be found in its data sheet, titled DRV8876 H-Bridge Motor Driver With Integrated Sense and Regulation, ⓒ 2019, published August 2019 - revised November 2019, by Texas Instruments, Inc. In particular, the model no, DRV8876 IC 22 includes certain internal features and functions that are desirable in apparatus 10. For example, the model no. DRV8876 IC 22 includes a current sensing feature, a current-sense feedback feature, a cycle-by-cycle current chopping feature, a fixed off-time current chopping feature, an overcurrent protection feature, and a short circuit protection feature. By having these functions internal to IC 22, there is no need to provide the amount of separate circuit elements on PCBA 18 that would otherwise be needed to achieve these functions if, for example, an H-bridge were constructed of individual circuit elements in lieu of IC 22. Accordingly, use of IC 22 in apparatus 10 allows the overall size of PCBA 18 to be smaller than it would be if separate circuit elements were used for the H-bridge and the above-listed associated functions.

In the illustrative embodiment of apparatus 10, linear AC pump is a model no. DB10S linear diaphragm pump available from Air Mac, Inc. of Dallas, Texas, U.S.A., a subsidiary of Diann Bao, Inc. of Changhua, Taiwan. As shown diagrammatically in Figs. 5-7, linear AC pump 24 includes an arm 126, a first diaphragm 128, and a second diaphragm 130. Diaphragms 128, 130 are made of a resilient or flexible material such as rubber, for example. Diaphragms 128, 130 flex back and forth between respective first positions, shown in Fig. 6, and respective second positions, shown in Fig. 7, as arm 126 is moved linearly back and forth between corresponding first and second positions. Diaphragm 128 separates a first chamber 132 of a first diaphragm housing 134 from a central chamber 136 of a main housing 138 of pump 24. Similarly, diaphragm 130 separates a second chamber 140 of a second diaphragm housing 142 from central chamber 136 of main housing 138.

First diaphragm housing 134 further includes a first partition wall 144 and a second partition wall 146 as shown in Figs. 5-7. Partition wall 144 includes a first opening 148 and a second opening 150. A first check valve 152 of pump 24 is provided in housing 134 to open and close first opening 148 and a second check valve 154 of pump 24 is provided in housing 134 to open and close second opening 150. Check valves 152, 54 are flapper type check valves having a resilient member, such as a plastic or rubber disk, supported relative to housing 134 by respective stems 156. When check valves 152, 154 are both closed, as shown in Fig. 5, walls 144, 146 and check valves 152, 154 cooperate to define a positive pressure chamber 158 and a negative pressure chamber 160. Thus, when check valves 152, 154 are both closed, first chamber 132 of first diaphragm housing 134 is pneumatically isolated from chambers 158, 160. Housing 134 includes a first outlet port 162 that provides a pneumatic passage in communication with chamber 158. Housing 134 also includes a first inlet port 164 that provides a pneumatic passage in communication with chamber 160.

Second diaphragm housing 142 is constructed similarly to first diaphragm housing 134. Thus, second diaphragm housing 142 further includes a first partition wall 166 and a second partition wall 168 as shown in Figs. 5-7. Partition wall 166 includes a first opening 170 and a second opening 172. A third check valve 174 of pump 24 is provided in housing 142 to open and close first opening 170 and a fourth check valve 176 of pump 24 is provided in housing 142 to open and close second opening 172. Check valves 174, 176 are flapper type check valves having a resilient member, such as a plastic or rubber disk, supported relative to wall 166 of housing 142 by respective stems 178. When check valves 174, 176 are both closed, as shown in Fig. 5, walls 166, 168 and check valves 174, 176 cooperate to define a positive pressure chamber 180 and a negative pressure chamber 182. Thus, when check valves 174, 176 are both closed, second chamber 140 of second diaphragm housing 142 is pneumatically isolated from chambers 180, 182. Housing 142 includes a second outlet port 184 that provides a pneumatic passage in communication with chamber 180. Housing 142 also includes a second inlet port 186 that provides a pneumatic passage in communication with chamber 182.

Arm 126 of pump 24 is a rigid member which is magnetized so as to have a first north pole 188 and a first south pole 190 on one side of arm 126 and so as to have a second north pole 192 and a second south pole 194 on an opposite side of arm 126. As shown in Figs. 5-7, poles 188, 194 are on opposite sides of arm 126 from each other and poles 190, 192 are on opposite sides of arm from each other. In some embodiments, separate magnetic elements are coupled to a main shaft or rod of arm 126 to provide arm 126 with north poles 188, 192 and south poles 190, 194 at the depicted locations.

Pump 24 further includes a first electromagnet 196 and a second electromagnet 198 that are situated within central chamber 136 of main housing 138 along with arm 126. First electromagnet 196 is situated on the side of arm 126 having poles 188, 190 and second electromagnet 198 is situated on the side of arm 126 having poles 194, 192. Electromagnets 196, 198 are spaced from arm 126, but are electromagnetically coupled to the poles 188, 190, 192, 194 of arm 126. As is known in the art, electromagnets are formed by a coil of wire that is wound around a core made of a ferromagnetic material, such as iron. When electric current is applied to the coil of wire, a magnetic field is created. In pump 24, electromagnets 196, 198 have generally E-shaped cores as shown in Fig. 5-7. For ease of illustration and due to the diagrammatic nature of Figs. 5-7, the coils of wire wound around the E-shaped cores of electromagnets 196, 198 are not shown.

Each of the cores of electromagnets 196, 198 are magnetized by their respective coils of wire so as to create three magnetic poles. Thus, electromagnet 196 has respective first, second, and third poles 200, 202, 204 and electromagnet 198 has respective first, second, and third poles 206, 208, 210. Depending upon the direction of current flow through the coils wound around the core of electromagnet 196, the first, second, and third poles 200, 202, 204 have either a magnetic north-south-north configuration, as shown in Figs. 5 and 7, or a south-north-south configuration, shown in Fig. 6. Also, depending upon the direction of current flow through the coils wound around the core of electromagnet 198, the first, second, and third poles 206, 208, 210 have either a magnetic south-north-south configuration, as shown in Figs. 5 and 7, or a north-south-north configuration, as shown in Fig. 6.

The coils of wire that are wound around the cores of electromagnets 196, 198 are electrically coupled to each other and are also electrically coupled via connector 96 (Fig. 2B) to the electrical lines extending from OUT1 and OUT2 pins of IC 22. Thus, when the line associated with OUT1 pin of IC 22 is in its high state delivering +24 V DC power to pump 24, current flows through the coils of electromagnets 196, 198 in a first direction and when OUT2 pin of IC 22 is in its high state delivering -24V DC power to pump 24, current flows through the coils of electromagnets 196, 198 in a second direction, opposite to the first direction. Thus, the change of direction of current flow through the coils of electromagnets 196, 198 changes the polarity of each of poles 200, 202, 204, 206, 208, 210 from either south to north, or from north to south, as the case may be.

When no DC voltage is applied to connector 96 by IC 22, there is no current flowing through pump 24 such that pump 24 is in a dormant state having arm 126 in a neutral position shown in Fig. 5, for example. In the neutral position, arm 126 is centered within chamber 136 such that neither of diaphragms 128, 130 is flexed. From the neutral position shown in Fig. 5, arm 126 moves either to the left into a first position, shown in Fig. 6, or to the right into a second position, shown in Fig. 7, depending upon the direction of current flow through the coils of electromagnets 196, 198 which is based on whether the OUT1 pin or OUT2 pin of IC 22 is in the high state.

As shown in Fig. 6, when electromagnets 196, 198 of linear AC pump 24 are energized to move arm 126 to the left, diaphragm 128 is flexed towards partition wall 144 of first diaphragm housing 134 and diaphragm 130 is flexed away from partition wall 166 of second diaphragm housing 142. Flexure of diaphragm 128 towards wall 144 increases the air pressure within chamber 132 which, in turn, causes check valve 152 to open to allow pressurized air to pass through opening 148 past check valve 152 from chamber 132 into chamber 158 as indicated by arrow 212 in Fig. 6. As the pressurized air moves from chamber 132 into chamber 158, a similar quantity of air is forced from chamber 158 through outlet port 162 of first diaphragm housing 134 as indicated by arrow 214 in Fig. 6. This results in air flow through a conduit segment represented by dashed arrow 216 to a T-connector 218 having a branch 218a pneumatically coupled to conduit 34.

In the illustrative embodiment, the air flowing in conduit segment 216 passes through a check valve 220 into a second branch 218b of T-connector 218 and then through conduit 34, manifold 28, one of valve(s) 30, and conduit 36 into one of bladder(s) 26, thereby to increase the pressure within the respective bladder 26. Flexure of diaphragm 130 away from wall 266 of second diaphragm housing 142 reduces the air pressure in chamber 140 which, in turn, causes check valve 176 to open to allow air to be drawn through opening 172 past check valve 176 from chamber 182 into chamber 140 as indicated by arrow 222 in Fig. 6. As the pressurized air moves from chamber 182 into chamber 140, a similar quantity of air is drawn from ambient atmosphere 224 into chamber 182 through inlet port 186 of second diaphragm housing 142 as indicated by arrow 226 in Fig. 6.

As shown in Fig. 7, when electromagnets 196, 198 of linear AC pump 24 are energized to move arm 126 to the right, diaphragm 128 is flexed away from partition wall 144 of first diaphragm housing 134 and diaphragm 130 is flexed towards partition wall 166 of second diaphragm housing 142. Flexure of diaphragm 130 towards wall 166 increases the air pressure within chamber 140 which, in turn, causes check valve 174 to open to allow pressurized air to pass through opening 170 past check valve 174 from chamber 140 into chamber 180 as indicated by arrow 228 in Fig. 7. As the pressurized air moves from chamber 140 into chamber 180, a similar quantity of air is forced from chamber 180 through outlet port 184 of second diaphragm housing 142 as indicated by arrow 230 in Fig. 7. This results in air flow through a conduit segment represented by dashed arrow 232 to T-connector 218.

In the illustrative embodiment, the air flowing in conduit segment 232 passes through a check valve 234 into a third branch 218c of T-connector 218 and then through conduit 34, manifold 28, one of valve(s) 30, and conduit 36 into one of bladder(s) 26, thereby to increase the pressure within the respective bladder 26. Flexure of diaphragm 128 away from wall 244 of first diaphragm housing 134 reduces the air pressure in chamber 132 which, in turn, causes check valve 154 to open to allow air to be drawn through opening 150 past check valve 154 from chamber 160 into chamber 132 as indicated by arrow 236 in Fig. 7. As the pressurized air moves from chamber 160 into chamber 132, a similar quantity of air is drawn from ambient atmosphere 224 into chamber 160 through inlet port 164 of first diaphragm housing 134 as indicated by arrow 238 in Fig. 6.

Based on the above description, it should be appreciated that, as arm 126 of pump 24 is reciprocally and linearly driven back and forth between the first position of Fig. 6 and the second position of Fig. 7 by energization of electromagnets 196, 198 by the +24 V/-24 V square wave produced by OUT1 and OUT2 pins of IC, diaphragms 128, 130 are flexed to produce air pulses that are expelled alternately from respective outlet ports 162, 184 of pump 24. The pressure pulses are fed through respective conduit segments 216, 232 past check valves 220, 234 of T-connector 218 to one of bladder(s) 26 through conduit 34, manifold 28, one of valve(s) 30, and conduit 36. Check valve 234 prevents the pressure pulse produced in conduit 216 from back flowing into conduit segment 232. Similarly, check valve 220 prevents the pressure pulse produced in conduit 232 from back flowing into conduit segment 216.

After the bladder 26 being inflated by pump 24 reaches its target pressure (i.e., is within a tolerance range between an upper target pressure limit and a lower target pressure limit) as measured by the associated pressure sensor 32, microcontroller 20 changes the sleep mode control signal on line 74 from the high state to the low state. In response to the NSLEEP pin of IC 22 receiving the low state sleep mode control signal from microcontroller 20, IC 22 enters the low power sleep mode thereby turning off IC 22, which effectively turns off pump 24 due to the absence of any +/- 24 V output at the OUT1 and OUT2 pins of IC 22.

When terms of degree such as "generally," "substantially," and "about" are used herein in connection with a numerical value or a qualitative term susceptible to a numerical measurement, it is contemplated that an amount that is plus or minus 10 percent, and possibly up to plus or minus 20 percent, of the numerical value, is covered by such language, unless specifically noted otherwise, to at least account for manufacturing tolerances. For example, a voltage that is "about 24 V" includes voltages that are from 21.6 V to 26.4 V, and possibly from 19.2 V to 28.8 V, just to give one example. Otherwise, a suitable definition for "generally," "substantially," and "about" is largely, but not necessarily wholly, the term specified.

The invention is defined by the claims.

## Claims

1. An apparatus (12) configured for driving a linear AC air pump (24) located inside of an air mattress (12) to provide pressurized air to one or more bladders (26) included within the air mattress (12) comprising
a power converter (16) to convert incoming alternating current (AC) mains power into a direct current (DC) voltage,
a linear AC pump (24) having an arm (126) configured to reciprocate substantially linearly back and forth to move at least one diaphragm (128, 130) of the linear AC pump (24) to pressurize air that is output from the linear AC pump, and
a DC motor driver including an H-bridge (102) that receives the DC voltage from the power converter as an input and that generates a square wave as an output that is coupled to the linear AC pump (24) to drive the arm back and forth; and
a microcontroller (20) that provides a first PWM control signal and a second PWM control signal to the DC motor driver to control a frequency of the square wave;
wherein the DC motor driver is controlled to produce the square wave with a frequency of about 60 Hz during initial inflation of the one or more bladders and wherein the DC motor driver is controlled to produce the square wave frequency of about 50 Hz after the initial inflation.

2. The apparatus (12) of claim 1, wherein the square wave has a high state of about 24 VDC and a low state of about -24 VDC.

3. The apparatus (12) of any one of claims 1 to 2, wherein when the first PWM control signal is in a high state, the second PWM signal is in a low state, and wherein when the second PWM control signal is in a high state, the first PWM control signal is in a low state.

4. The apparatus (12) of any one of claims 1 to 2, wherein the first and second PWM control signals each have a duty cycle of about 50%.

5. The apparatus (12) of any preceding claim, wherein the at least one diaphragm (128, 130) of the linear AC pump comprises two diaphragms (128, 130), and wherein preferably the arm (126) comprises a magnetic arm and wherein the linear AC pump (24) comprises a pair of electromagnets that are energized by the square wave to reciprocally drive the arm back and forth to flex the two diaphragms.

6. The apparatus of claim 5, wherein the arm is situated between the two diaphragms and wherein, preferably the arm comprises a magnetic arm and wherein the linear AC pump comprises a pair of electromagnets (196, 198) that are energized by the square wave to reciprocally drive the arm back and forth to flex the two diaphragms (128, 130).

7. The apparatus (12) of any preceding claim, wherein the AC mains power is in the range of about 80 Volts AC (VAC) to about 264 VAC, and/or wherein the DC voltage is about 24 Volts DC (VDC).

8. The apparatus (12) of any preceding claim, wherein the DC motor driver comprises an integrated circuit (IC) chip (22).

9. The apparatus (12) of claim 8, wherein the IC chip (22) includes either or both of a current sensing feature and a current-sense feedback feature, and/or wherein the IC chip (22) includes one or more of a cycle-by-cycle current chopping feature, a fixed off-time current chopping feature, an overcurrent protection feature, or a short circuit protection feature.

## Patentansprüche

1. Vorrichtung (12), die ausgebildet ist, um eine lineare Wechselstromluftpumpe (24), die sich innerhalb einer Luftmatratze (12) befindet, zum Bereitstellen von Druckluft an eine oder mehrere innerhalb der Luftmatratze (12) eingeschlossene Blasen (26) anzutreiben, umfassend
einen Leistungswandler (16) zum Wandeln von eingehendem Wechselstrom (AC) eines Stromnetzes in eine Gleichstrom- (DC-) Spannung,
eine lineare Wechselstrompumpe (24), die einen Arm (126) aufweist, der ausgebildet ist, um sich im Wesentlichen linear hin und her zu bewegen, um mindestens eine Membran (128, 130) der linearen Wechselstrompumpe (24) zu bewegen, um Luft, die von der linearen Wechselstrompumpe ausgegeben wird, mit Druck zu beaufschlagen, und
einen Gleichstrommotorantrieb, der eine H-Brücke (102) einschließt, die die Gleichstromspannung vom Leistungswandler als Eingabe empfängt und die eine Rechteckwelle als Ausgabe erzeugt, die mit der linearen Wechselstrompumpe (24) gekoppelt ist, um den Arm hin und her zu bewegen; und
eine Mikrosteuereinheit (20), die dem Gleichstrommotorantrieb ein erstes PWM-Steuersignal und ein zweites PWM-Steuersignal zum Steuern einer Frequenz der Rechteckwelle bereitstellt;
wobei der Gleichstrommotorantrieb zum Produzieren der Rechteckwelle mit einer Frequenz von etwa 60 Hz während eines anfänglichen Aufblasens der einen oder mehreren Blasen gesteuert wird und wobei der Gleichstrommotorantrieb zum Produzieren der Rechteckwellenfrequenz von etwa 50 Hz nach dem anfänglichen Aufblasen gesteuert wird.

2. Vorrichtung (12) nach Anspruch 1, wobei die Rechteckwelle einen hohen Zustand von etwa 24 VDC und einen niedrigen Zustand von etwa -24 VDC aufweist.

3. Vorrichtung (12) nach einem der Ansprüche 1 bis 2, wobei, wenn das erste PWM-Steuersignal in einem hohen Zustand ist, das zweite PWM-Steuersignal in einem niedrigen Zustand ist und wobei, wenn das zweite PWM-Steuersignal in einem hohen Zustand ist, das erste PWM-Steuersignal in einem niedrigen Zustand ist.

4. Vorrichtung (12) nach einem der Ansprüche 1 bis 2, wobei das erste und das zweite PWM-Steuersignal jeweils einen Arbeitszyklus von etwa 50 % aufweisen.

5. Vorrichtung (12) nach einem vorstehenden Anspruch, wobei die mindestens eine Membran (128, 130) der linearen Wechselstrompumpe zwei Membrane (128, 130) umfasst und wobei der Arm (126) vorzugsweise einen Magnetarm umfasst und wobei die lineare Wechselstrompumpe (24) ein Elektromagnetepaar umfasst, das von der Rechteckwelle angesteuert wird, um den Arm zum Biegen der zwei Membrane hin und her zu bewegen.

6. Vorrichtung nach Anspruch 5,
wobei sich der Arm zwischen den zwei Membranen befindet und wobei der Arm vorzugsweise einen Magnetarm umfasst und wobei die lineare Wechselstrompumpe ein Elektromagnetepaar (196, 198) umfasst, das von der Rechteckwelle angesteuert wird, um den Arm zum Biegen der zwei Membrane (128, 130) hin und her zu bewegen.

7. Vorrichtung (12) nach einem vorstehenden Anspruch, wobei der Wechselstrom des Stromnetzes im Bereich von etwa 80 Volt AC (VAC) bis etwa 264 VAC liegt und/oder wobei die Gleichstromspannung etwa 24 Volt DC (VDC) beträgt.

8. Vorrichtung (12) nach einem vorstehenden Anspruch, wobei der Gleichstrommotorantrieb einen Chip (22) mit integriertem Schaltkreis (IC) umfasst.

9. Vorrichtung (12) nach Anspruch 8,
wobei der IC-Chip (22) eines oder beide von einer Stromerfassungsfunktion und einer Stromerfassungsrückmeldefunktion einschließt und/oder wobei der IC-Chip (22) eines oder mehrere von einer Stromunterbrechungsfunktion auf Zyklusbasis, einer Stromunterbrechungsfunktion mit fester Ausschaltzeit, einer Überstromschutzfunktion oder einer Kurzschlussschutzfunktion einschließt.

## Revendications

1. Appareil (12) configuré pour entraîner une pompe (24) à air à courant alternatif linéaire placée à l'intérieur d'un matelas gonflable (12) de manière à fournir de l'air sous pression à une ou plusieurs vessies (26) incluses à l'intérieur du matelas gonflable (12) comprenant
un convertisseur de puissance (16) pour convertir une puissance de secteur à courant alternatif (CA) entrante en une tension à courant continu (CC),
une pompe (24) à courant alternatif linéaire présentant un bras (126) configuré pour effectuer un mouvement de va-et-vient sensiblement linéaire d'avant en arrière de manière à déplacer au moins un diaphragme (128, 130) de la pompe (24) à courant alternatif linéaire pour mettre sous pression de l'air qui est produit en sortie à partir de la pompe à courant alternatif linéaire, et
un dispositif d'entraînement de moteur à courant continu incluant un pont en H (102) qui reçoit la tension continue provenant du convertisseur de puissance en tant qu'une entrée et qui génère une onde carrée en tant qu'une sortie qui est accouplée à la pompe (24) à courant alternatif linéaire pour entraîner le bras en va-et-vient ; et
un micro-dispositif de commande (20) qui fournit un premier signal de commande PWM et un deuxième signal de commande PWM au dispositif d'entraînement de moteur à courant continu pour commander une fréquence de l'onde carrée ;
dans lequel le dispositif d'entraînement de moteur à courant continu est commandé pour produire l'onde carrée avec une fréquence d'environ 60 Hz au cours d'un gonflage initial de la une ou des plusieurs vessies et dans lequel le dispositif d'entraînement de moteur à courant continu est commandé pour produire la fréquence d'onde carrée d'environ 50 Hz après le gonflage initial.

2. Appareil (12) selon la revendication 1, dans lequel l'onde carrée présente un état haut d'environ 24 VCC et un état bas d'environ -24 VCC.

3. Appareil (12) selon l'une quelconque des revendications 1 à 2, dans lequel, lorsque le premier signal de commande PWM est dans un état haut, le deuxième signal PWM est dans un état bas, et dans lequel, lorsque le deuxième signal de commande PWM est dans un état haut, le premier signal de commande PWM est dans un état bas.

4. Appareil (12) selon l'une quelconque des revendications 1 à 2, dans lequel les premier et deuxième signaux de commande PWM présentent chacun un cycle de service d'environ 50 %.

5. Appareil (12) selon une quelconque revendication précédente, dans lequel le au moins un diaphragme (128, 130) de la pompe à courant alternatif linéaire comprend deux diaphragmes (128, 130), et dans lequel, de préférence, le bras (126) comprend un bras magnétique et dans lequel la pompe (24) à courant alternatif linéaire comprend une paire d'électroaimants qui sont mis sous tension par l'onde carrée pour entraîner en va-et-vient le bras d'avant en arrière de manière à fléchir les deux diaphragmes.

6. Appareil selon la revendication 5,
dans lequel le bras est situé entre les deux diaphragmes et dans lequel, de préférence, le bras comprend un bras magnétique et dans lequel la pompe à courant alternatif linéaire comprend une paire d'électroaimants (196, 198) qui sont mis sous tension par l'onde carrée pour entraîner en va-et-vient le bras d'avant en arrière de manière à fléchir les deux diaphragmes (128, 130).

7. Appareil (12) selon une quelconque revendication précédente, dans lequel la puissance de secteur à courant alternatif se trouve dans la plage comprise entre environ 80 volts courant alternatif (VCA) et environ 264 VCA, et/ou dans lequel la tension continue est d'environ 24 volts courant continu (VCC).

8. Appareil (12) selon une quelconque revendication précédente, dans lequel le dispositif d'entraînement de moteur à courant continu comprend une puce (22) de circuit intégré (IC).

9. Appareil (12) selon la revendication 8,
dans lequel la puce IC (22) inclut l'une ou les deux d'une fonction de détection de courant et d'une fonction de rétroaction de détection de courant, et/ou dans lequel la puce IC (22) inclut une ou plusieurs d'une fonction de découpage de courant cycle par cycle, d'une fonction de découpage de courant à temps de blocage fixe, d'une fonction de protection contre les surintensités, ou d'une fonction de protection contre les courts-circuits.
